# EUROPÄISCHE PATENTSCHRIFT

(11) **EP 2 279 314 B1**
(45) Veröffentlichungstag und Bekanntmachung des Hinweises auf die Patenterteilung: **17.07.2013**
(21) Anmeldenummer: 09732379.4
(22) Anmeldetag: 14.04.2009
(51) Int. Cl.: E04H 12/00, H02B 1/56, F03D 11/00

(54) **WINDKRAFTANLAGE MIT VERBESSERTER KÜHLLUFTFÜHRUNG**
WIND TURBINE WITH IMPROVED COOLING AIR DELIVERY
ÉOLIENNE AVEC GUIDAGE D'AIR DE REFROIDISSEMENT AMÉLIORÉ

(30) Priorität: 16.04.2008 DE 102008019271
(43) Veröffentlichungstag der Anmeldung: 02.02.2011
(73) Patentinhaber: Kenersys GmbH, 48155 Münster (DE)
(72) Erfinder: UPHUES, Ulrich, 48431 Rheine (DE); BECKER, Markus, 48147 Münster (DE)
(74) Vertreter: Raffay & Fleck
(86) Internationale Anmeldenummer: PCT/EP2009/054375
(87) Internationale Veröffentlichungsnummer: WO 2009/127608

(56) Entgegenhaltungen:
- WO-A1-03/036085
- WO-A2-2007/110718
- WO-A2-2009/094991
- DE-A1-102006 043 936
- DE-U1-202006 003 628

## Beschreibung

### Technisches Gebiet

Die Erfindung betrifft eine Windkraftanlage mit einem eine verschließbare Einstiegsöffnung aufweisenden Turm und innerhalb des Turms angeordneten elektrischen Komponenten.

### Stand der Technik

Windkraftanlagen sind in den unterschiedlichsten Bauformen seit langem bekannt, sie werden inzwischen regelmäßig eingesetzt. Der Anteil der mit Windkraftanlagen erzeugten Energie ist nicht nur in Deutschland, sondern auch in anderen Ländern stets gestiegen, inzwischen sind Windkraftanlagen in hoher Zahl sowohl landbasiert als auch off-shore aufgestellt und installiert.

Auch in Windkraftanlagen fällt, wie in nahezu allen Kraftwerken, bei der Umsetzung von Energie Abwärme an, die mit geeigneten Maßnahmen von der Anlage abgeführt werden muss.

Solche Abwärme entsteht dabei nicht nur im Bereich des typischerweise an der Turmspitze in einem Maschinengehäuse (Gondel) angeordneten Generators an, sondern auch an weiteren elektrischen Komponenten, die der Aufarbeitung der gewonnenen elektrischen Energie hinsichtlich Frequenz und Spannung dienen. Die zuletzt genannten Komponenten sind dabei bei modernen Windkraftanlagen häufig im Bereich des Turmfußes angeordnet, sie stehen zumeist entweder unmittelbar oder übereinander gestapelt auf dem Fundament. Auch diese Komponenten gilt es zu kühlen.

Um die Kühlung der genannten Komponenten, aber auch des Generators zu erzielen, sind unterschiedliche Lösungen bekannt. So ist z.B. in der WO 99/30031 eine Windkraftanlage offenbart, bei der Kühlluft zur Kühlung des Generators im Bereich des Turmfußes durch nicht näher spezifizierte Öffnungen in den Turm eingelassen wird, welche Kühlluft im Turm zunächst im Bereich des Fußes durch die Abwärme dort angeordneter elektrischer Komponenten erwärmt wird und dann aufgrund eines Kamineffektes im Turm nach oben steigt und zum Kühlen am Generator vorbei streicht, die Windkraftanlage dort schließlich verlässt.

Ein weiteres System zum Kühlen der Windkraftanlage, insbesondere der elektrischen Komponenten, ist in der DE 100 00 370 A1 beschrieben. Dort ist ein geschlossener Kühlkreislauf offenbart, in dem ein Kühlmedium (Luft) umlaufend entlang des Turmes nach oben, dort durch den Generator und anschließend zurück in Richtung des Turmfußes bewegt wird.

In der DE 10 2004 061391 A1 ist schließlich ein Luftkühlsystem beschrieben, welches explizit der Kühlung der im Bereich des Turmfußes bzw. -sockels angeordneten elektrischen Komponenten dient. Hier wird durch einen durch das Fundament des Turmes hindurch geführten Luftkanal, der neben der Windkraftanlage im Bereich des Untergrundes mit einer Öffnung endet, Luft angesaugt und an den zu kühlenden elektrischen Komponenten vorbei geführt. Die so angesaugte Luft wird dann über ein Entlüftungssegment durch eine eigens hierfür vorgesehene Öffnung in der Turmwand wieder aus der Windkraftanlage heraus geführt.

Die bekannten Windkraftanlagen bzw. die bei diesen enthaltenen Kühlsysteme erfüllen zwar den Zweck einer ausreichenden Kühlung der zu kühlenden Komponenten in der Regel zuverlässig, sie sind jedoch in der Einrichtung kostspielig, verteuern somit die Windkraftanlage und benötigen vergleichsweise aufwändige und komplizierte zusätzliche Einrichtungen und Auslegungen der Windkraftanlage.

So erfordert ein geschlossener Kühlkreislauf, wie er in der DE 100 00 370 A1 offenbart ist, die Einrichtung entsprechender Kühlkanäle über die gesamte Höhe der Windkraftanlage, was einen entsprechenden konstruktiven Aufwand und erhöhte Herstellungskosten bedingt.

Bei einem Kühlsystem gemäß der DE 10 2004 061391 A1, das im Wesentlichen ausschließlich der Kühlung der im Bereich des Turmfußes bzw. -sockels angeordneten elektrischen Komponenten dient, ist die Planung und Herstellung aufwändig. Nicht nur, dass entsprechende Führungsleitungen durch das Fundament des Turmes bis ins Innere des Turmes hinein verlegt werden müssen, es ist zudem eine gesonderte Öffnung in der Turmwandung vorzusehen für das Entlüftungssegment. Heutzutage werden die Türme von Windkraftanlagen üblicherweise aus vorgefertigten Segmenten am Aufrichtungsort errichtet, wobei die Segmente aus Metall und/oder Kunststoff (Glasfaser verstärktem Kunststoff) bestehen können. Hierbei ist man bestrebt, die Wandstärke der Segmente so gering wie möglich zu halten, ohne jedoch Stabilitätseinbußen in Kauf zu nehmen. Dieses Bestreben rührt nicht nur von dem Wirtschaftlichkeiterfordernis eines geringen Materialeinsatzes her, sondern auch von Überlegungen hinsichtlich des Gewichts der einzelnen Segmente, das für einen Transport zum Aufrichtungsort kritische Werte nicht übersteigen darf. Insoweit kann das Gewicht eines Turmsegmentes eine Begrenzung für die Größe eines solchen Segmentes sein, wobei grundsätzlich für einen schnellen und kostengünstigen Aufbau der Windkraftanlage größere Segmente von Vorteil sind.

Aus statischen Gründen bedingt jedes Einbringen einer Öffnung bzw. eines Durchbruches in die Hülle des Turmes bzw. eines Turmsegmentes eine Schwächung, die mit konstruktivem Aufwand, z.B. Verstärkung der Segmentwand im Bereich der Durchbrechung, aufgefangen werden muss. Das Vorsehen von entsprechenden Öffnungen in der Turmwand bzw. in einem Segment ist insoweit kostspielig, nicht nur aufgrund der für die Bearbeitung erforderlichen Zeit und des Materialeinsatzes.

Aus gleichen Überlegungen ist auch das in der WO 99/30031 offenbarte System verbesserungswürdig, bei dem erkennbar offensichtlich durch mehrere im Bereich des Fußes des Turms gebildete Öffnungen Kühlluft einströmt. Auch hier sind also entsprechend mehrere Öffnungen in der Turmwand anzubringen mit den oben geschilderten unerwünschten Folgen.

In den prioritätsälteren, aber nach Prioritätstag und Anmeldetag dieser Anmeldung veröffentlichten Druckschriften DE 10 2008 012 664 A1 und WO 2009/094991 A2 ist bei einer Windenergieanlage ein vergrößerter Türausschnitt in dem Turm der Anlage offenbart, der oberhalb und unterhalb der darin angeordneten Türöffnung jeweils Luftdurchtrittsöffnungen aufweist. Diese Luftdurchtrittsöffnungen sind dort ausschließlich Lufteinlassöffnungen. Von dort wird die eintretende Kühlluft im Turm weiterbefördert und durch weitere in der Turmwand angeordnete Öffnungen wieder nach außen geführt. Auch hier sind also weitere Durchbrechungen der Turmwand für die Kühlluftführung vorzusehen mit den geschilderten statischen Problemen.

Die WO 03/036085 A1 beschreibt die Vorgehensweise, beim Bau eines Turmsegmentes die Türöffnung als Gussteil auszubilden und hieran Stahlbleche zur Bildung der Turmwand durch Schweißen festzulegen. Damit soll die Zahl der Schweißnähte gegenüber einer Lösung verringert werden, bei der die Türöffnung unmittelbar mit geschweißten Blechen realisiert wird. Die Verringerung der Zahl der Schweißnähte wird mit einer verringerten Schwächung der Statik des Turmsegmentes begründet. In einer Variante der dort geschilderten Vorgehensweise wird vorgeschlagen, in dem Gussteil zugleich weitere Funktionselemente auszubilden und diese mit zu gießen. Als ein mögliches Funktionsteil wird eine Lüftungsöffnung genannt, ohne dass deren Lage und Lüftungsrichtung (Lufteintritt bzw. Luftaustritt) näher dargelegt wird.

### Darstellung der Erfindung

Hier setzt die Aufgabe der Erfindung an. Mit der Erfindung soll nämlich die Aufgabe gelöst werden, eine Windkraftanlage mit einem Kühlsystem zum Kühlen elektrischer Komponenten, insbesondere der im Bereich des Fußes des Turmes angeordneten elektrischen Komponenten, anzugeben, welches Kühlsystem kostengünstig eingerichtet werden kann.

Diese Aufgabe wird gelöst durch eine Windkraftanlage mit den Merkmalen des Anspruchs 1. Vorteilhafte Weiterbildungen sind in den abhängigen Ansprüchen 2 bis 5 angegeben.

Die erfindungswesentliche Erkenntnis bzw. die Idee besteht darin, für ein offenes Kühlsystem mit Kühlluft Lufteinlass- und -auslassöffnungen nicht etwa in eigens dafür geschaffenen, gesonderten Öffnungen des Turmes unterzubringen, sondern vielmehr die ohnehin im Turm vorhandene Öffnung für die Tür für die Anbringung von Lufteintritts- und -austrittsöffnungen zu verwenden und diese Türöffnung gleichermaßen zu erweitern. Es wird mit anderen Worten eine Windkraftanlage offenbart, die mit einem einzigen, gegenüber einer herkömmlichen Türöffnung vergrößerten Turmausschnitt auskommen kann, wobei in diesem Turmausschnitt einerseits die Türöffnung, andererseits Luftdurchtrittöffnungen angeordnet sind, durch die Kühlluft ein- bzw. austreten kann.

Es hat sich nämlich überraschend gezeigt, dass mit dieser einfach anmutenden Maßnahme einer Vergrößerung der üblicherweise anzubringenden Türöffnung zu einem vergrößerten Turmausschnitt die Stabilität des Turmes bzw. des Turmsegmentes in diesem Bereich kaum bzw. nicht übermäßig verringert wird, so dass gegenüber dem beim Vorsehen der Türöffnung ohnehin aufzubringenden Konstruktions- bzw. Materialaufwand zur Stärkung des Turmes in diesem Bereich keine wesentlichen bzw. erheblichen Mehraufwendungen erforderlich sind, wie sie jedoch beim Vorsehen weiterer, getrennter Öffnungen für die Durchführung von Luft vonnöten sind.

Dadurch können Lufteintritts- und -austrittsöffnungen besonders kostengünstig und ohne erhebliche statische Schwächung des Turmes angebracht werden.

Aufgrund der baulichen Gegebenheiten des Turmes wird erfindungsgemäß die Türöffnung nicht in der Breite, in der eine weitere Ausdehnung eine erhebliche Schwächung des Turmes bedeuten würde, sondern vielmehr in der Höhe erweitert. Entsprechend ist der Turmausschnitt in Bezug zu der Türöffnung nach oben und unten verlängert und oberhalb und unterhalb der Türöffnung ist jeweils wenigstens eine Luftdurchtrittsöffnung angeordnet bzw. geführt.

Ergänzend zu der Anordnung von Lufteintrittsöffnungen im Bereich unterhalb oder oberhalb der Türöffnung können Lufteintrittsöffnungen auch durch entsprechende Schlitze in einer die Türöffnung verschließenden Tür bestehen. Diese Lösung bietet, so lange die Querschnittsfläche der Lufteintrittsschlitze zur ausreichenden Versorgung mit Kühlluft genügt, den Vorteil, dass der Turmausschnitt insgesamt noch kleiner in der Fläche gehalten werden kann und damit die statische Beeinträchtigung des Turmes besonders gering bleibt.

Die erfindungsgemäße Lösung zur Führung der Kühlluft mit Lufteintritts- und -austrittsöffnungen im Bereich eines vergrößerten Turmausschnittes mit darin integrierter Türöffnung ist besonders geeignet zum Kühlen der im Bereich der Türöffnung angeordneten, insbesondere im Bereich des Turmfußes liegenden elektrischen Komponenten, wie Leistungsumrichter und dergleichen. Hier kann nämlich kühlere Außenluft durch die Lufteintrittsöffnung angesaugt, an den zu kühlenden Komponenten vorbei streichen gelassen und anschließend unmittelbar durch die Luftaustrittsöffnung wieder abgeblasen werden.

Um zu verhindern, dass durch die Lufteintritts- bzw. -austrittsöffnungen nicht befugte Personen, Tiere oder Gegenstände ins Innere der Windkraftanlage gelangen, sind die entsprechenden Öffnungen mit Vorteil durch geeignete Einrichtungen, wie insbesondere Gitter, Lamellenvorhänge oder dergleichen verschlossen.

Der Luftstrom von Kühlluft im Eintritt durch die Lufteintrittsöffnungen, vorbei an den zu kühlenden Komponenten und schließlich im Austritt durch die Luftaustrittsöffnungen kann insbesondere mit Hilfe eines gesonderten Luftfördermittels in Gang gebracht und aufrecht gehalten werden, z.B. mit einem Ventilator. Hierbei kann ein einziger Ventilator vorgesehen sein, der für die gesamte Zirkulation sorgt, es können aber auch mehrere Ventiltoren vorhanden sein, bspw. einer zum Ansaugen der Kühlluft, ein weiterer zum Ausblasen der erwärmten Luft durch die Luftaustrittsöffnung(en).

### Kurze Beschreibung der Zeichnungen

Weitere Vorteile und Merkmale der erfindungsgemäßen Lösung ergeben sich aus der nachfolgenden Beschreibung eines Ausführungsbeispiels anhand der beigefügten Figur. Dabei zeigt:

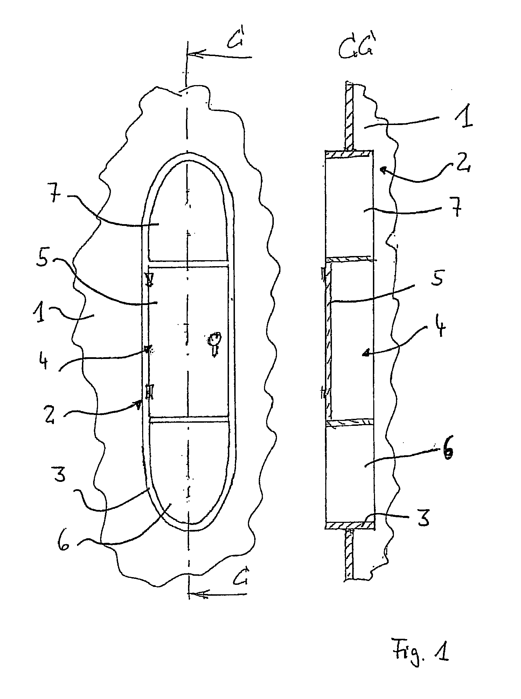

Figur 1 einmal in einer Draufsicht, einmal in einer geschnittenen Seitenansicht einen Ausschnitt aus einem Turm einer erfindungsgemäßen Windkraftanlage mit einem erfindungsgemäß ausgestalteten Turmausschnitt in einem Ausführungsbeispiel.

### Weg(e) zur Ausführung der Erfindung

In Figur 1 ist in einem Ausschnitt der Turm 1 einer nicht näher dargestellten Windkraftanlage gezeigt, insbesondere ein unterstes, am Fuße des Turmes gelegenes Segment. Der Turm 1 hat in dem in Figur 1 gezeigten Abschnitt einen Turmausschnitt 2, der durchgehend gestaltet ist. Der Turmausschnitt 2 ist von einem verstärkenden Rahmen 3 umlaufend umgeben, der die Stabilität der Turmhülle an dieser Stelle gewährleistet, welche Stabilität durch den Turmausschnitt 2 grundsätzlich beeinträchtigt ist.

Der Turmausschnitt 2 befindet sich an dem Turm 1 der Windkraftanlage an einer für die Türöffnung üblichen Stelle, ist gegenüber einem herkömmlichen Ausschnitt für die Türöffnung jedoch vergrößert. Der Turmausschnitt 2 enthält so auch bei dem erfindungsgemäßen Ausführungsbeispiel die Türöffnung 4, in der in üblicher Weise eine diese Öffnung verschließende Tür 5 angeordnet ist. Über die Türöffnung 4 nach oberhalb und unterhalb hinaus ist der Turmausschnitt 2 verglichen mit herkömmlichen Türöffnungen an bekannten Windkraftanlagen verlängert ausgebildet mit einer unterhalb der Türöffnung 4 gelegenen Lufteintrittsöffnung 6 und einer oberhalb der Türöffnung 4 gelegenen Luftaustrittsöffnung 7. Diese Luftdurchtrittsöffnungen, die Lufteintrittsöffnung 6 und die Luftaustrittsöffnung 7, sind in dem Ausführungsbeispiel schematisch dargestellt, sie können bspw. durch Luftführungsrohre oder dergleichen unterteilt sein. Insbesondere werden die Luftdurchtrittsöffnungen 6,7 in der praktischen Anwendung überdeckt sein durch z.B. ein Gitter, um hier das Eindringen von Personen, Tieren oder Fremdkörpern zu vermeiden. In der Umfangsrichtung des Turmes 1 ist der Turmausschnitt 2 gegenüber einer herkömmlichen Türöffnung an bekannten Windkraftanlagen nicht bzw. nicht wesentlich vergrößert.

Im Bereich hinter dem Turmausschnitt 2 im Innern des Turmes 1 befinden sich (hier nicht dargestellt) in einstöckiger oder mehrstöckiger Anordnung elektrische Komponenten, die es zu kühlen gilt. Diese werden mittels durch die Luftdurchtrittsöffnungen 6,7 strömende Luft gekühlt. Z.B. mittels Ventilatoren oder dergleichen Luftfördermitteln wird kühle Außenluft durch die Lufteintrittsöffnung 6 ins Innere des Turmes 1 eingesaugt. Diese Luft streicht dann an den zu kühlenden elektrischen Komponenten vorbei und wird durch die Luftaustrittsöffnung 7 wieder herausgedrückt bzw. -geblasen, z.B. mittels eines weiteren Ventilators.

Es dürfte einleuchten, dass die Anordnung von Lufteintritts- und -austrittsöffnungen in einem die Türöffnung aufnehmendem Turmausschnitt eine erheblich einfachere Konstruktion und Auslegung des Turmes in diesem Bereich ermöglicht im Vergleich zu solchen Auslegungen, die neben der Türöffnung weitere und gesonderte Durchtrittsöffnung zur Führung von Kühlluft vorsehen.

### Bezugszeichenliste

| | |
|---|---|
| 1 | Turm |
| 2 | Turmausschnitt |
| 3 | Rahmen |
| 4 | Türöffnung |
| 5 | Tür |
| 6 | Lufteintrittsöffnung |
| 7 | Luftaustrittsöffnung |

## Patentansprüche

1. Windkraftanlage mit einem eine verschließbare Einstiegsöffnung aufweisenden Turm und innerhalb des Turmes angeordneten elektrischen Komponenten, wobei die Türöffnung in einem durchgehenden Turmausschnitt angeordnet ist, der größer ist als die Türöffnung und durch welchen hindurch Luftdurchtrittsöffnungen, nämlich Lufteintritts- und/oder Luftaustrittsöffnungen, zur Durchleitung von Kühlluft gelegt sind, wobei der Turmausschnitt in Bezug zu der Türöffnung nach oben und unten verlängert ist und oberhalb und unterhalb der Türöffnung jeweils wenigstens eine Luftdurchtrittsöffnung geführt ist, **dadurch gekennzeichnet, dass** die Luftdurchtrittsöffnung unterhalb der Türöffnung eine Luftdurchtrittsöffnung mit einer Luftführung in eine erste Richtung, nämlich eine Lufteintrittsöffnung, ist und dass die Luftdurchtrittsöffnung oberhalb der Türöffnung eine Luftdurchtrittsöffnung mit einer Luftführung in eine zweite, der ersten Richtung entgegengesetzte Richtung, nämlich eine Luftaustrittöffnung, ist.

2. Windkraftanlage nach Anspruch 1, **dadurch gekennzeichnet, dass** eine die Türöffnung verschließende Tür mit Luftdurchtrittsöffnungen versehen ist, die als Lufteintrittsöffnungen dienen.

3. Windkraftanlage nach einem der vorhergehenden Ansprüche, **dadurch gekennzeichnet, dass** mit der durch die Luftdurchtrittsöffnung zu kühlende elektrische Komponenten im Wesentlichen im Bereich des Turmausschnittes innerhalb des Turmes angeordnet sind, insbesondere im Bereich des Turmfußes.

4. Windkraftanlage nach einem der vorhergehenden Ansprüche, **dadurch gekennzeichnet, dass** die Lufteintrittsöffnung(en) und/oder die Luftaustrittsöffnung(en) mit einem Gitter, bewegbaren Lamellen oder ähnlichen Einrichtungen gegen ungewünschtes Eindringen von Personen, Tieren und/oder Gegenständen gesichert sind.

5. Windkraftanlage nach einem der vorhergehenden Ansprüche, **dadurch gekennzeichnet, dass** wenigstens ein Luftfördermittel vorgesehen ist zum Ansaugen von Luft durch die Lufteintrittsöffnung bzw. zum Ausblasen von Luft durch die Luftaustrittsöffnung.

## Claims

1. Wind power station with a tower presenting a closable entry opening and electrical components arranged inside the tower, whereas the door opening is provided in a continuous tower port, which is larger than the door opening and through which air passage openings, namely air inlet and/or air outlet openings, are laid for conveying cooling air, whereas the tower port is lengthened with reference to the door opening upwards and downwards and at least one air passage opening respectively is guided above and below the door opening, **characterised in that** the air passage opening below the door opening is an air passage opening with an air guide in a first direction, namely an air inlet opening and that the air passage opening above the door opening is an air passage opening with an air guide into a second direction, opposite the first direction, namely an air outlet opening.

2. A wind power station according to claim 1, **characterised in that** the door closing the door opening is provided with air passage openings, acting as air inlet openings.

3. A wind power station according to any of the preceding claims, **characterised in that** electrical components to be cooled through the air inlet opening are mostly provided in the area of the tower port inside the tower, in particular in the area of the tower foot.

4. A wind power station according to any of the preceding claims, **characterised in that** the air inlet opening(s) and/or the air outlet opening(s) are secred with a grid, mobile lamellae or similar devices against unwanted intrusion of people, animals and/or objects.

5. A wind power station according to any of the preceding claims, **characterised in that** least one air conveying system is provided for sucking air through the air inlet opening or for blowing air out through the air outlet opening.

## Revendications

1. Centrale éolienne possédant une tour présentant une ouverture d'accès obturable et des composants électriques disposés à l'intérieur de la tour, où l'ouverture de porte est disposée dans une découpe de tour continue, de taille supérieure à l'ouverture de porte et à travers laquelle des ouvertures de passage d'air, à savoir des ouvertures d'entrée d'air et/ou de sortie d'air sont aménagées, pour permettre le passage de l'air de refroidissement, où la découpe de la tour par rapport à l'ouverture de porte est prolongée vers le haut et vers le bas et au moins une ouverture de passage d'air est guidée respectivement au-dessus et au-dessous de l'ouverture de porte, **caractérisée en ce que** l'ouverture de passage d'air inférieure à l'ouverture de porte est une ouverture de passage d'air disposant d'un guidage d'air dans une première direction, à savoir une ouverture de passage d'air et **en ce que** l'ouverture de passage d'air au-dessus de l'ouverture de porte est une ouverture de passage d'air pourvue d'un guidage d'air dans une seconde direction, opposée à la première direction, à savoir une ouverture de sortie d'air.

2. Centrale éolienne selon la revendication 1, **caractérisée en ce qu'**une porte obturant l'ouverture de porte est pourvue d'ouvertures de passages d'air, faisant office d'ouvertures d'entrée d'air.

3. Centrale éolienne selon l'une quelconque des revendications précédentes, **caractérisée en ce que** des composants électriques à refroidir à travers l'ouverture de passage d'air sont disposés plus ou moins dans la zone de l'encadrement de tour à l'intérieur de la tour, en particulier dans la zone du pied de la tour.

4. Centrale éolienne selon l'une quelconque des revendications précédentes, **caractérisée en ce que** la/les ouverture(s) d'entrée d'air et/ou la/les ouverture(s) de sortie d'air sont protégées à l'aide d'une grille, de lamelles mobiles ou de dispositifs similaire contre l'intrusion indésirable de personnes, d'animaux et/ou d'objets.

5. Centrale éolienne selon l'une quelconque des revendications précédentes, **caractérisée en ce qu'**au moins un moyen d'acheminement d'air est prévu pour aspirer l'air à travers l'ouverture d'entrée d'air ou pour expulser l'air à travers l'ouverture de sortie d'air.
